Europäisches Patentamt

European Patent Office

Office européen des brevets

(11) Numéro de publication : **0 379 392 B1**

(12) **FASCICULE DE BREVET EUROPEEN**

(45) Date de publication du fascicule du brevet :
**18.03.92 Bulletin 92/12**

(51) Int. Cl.⁵ : **F16C 11/06**

(21) Numéro de dépôt : **90400013.0**

(22) Date de dépôt : **03.01.90**

(54) **Articulation à rotule.**

(30) Priorité : **19.01.89 FR 8900619**

(43) Date de publication de la demande :
**25.07.90 Bulletin 90/30**

(45) Mention de la délivrance du brevet :
**18.03.92 Bulletin 92/12**

(84) Etats contractants désignés :
**DE GB IT**

(56) Documents cités :
**FR-A- 2 556 059**
**GB-A- 507 025**
**GB-A- 2 166 487**
**US-A- 3 776 649**
**US-A- 3 853 414**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Kerboul, Guy**
**10, Clos des Fauvettes**
**78780 Murecourt (FR)**

(74) Mandataire : **Jacobson, Claude et al**
**Cabinet Lavoix 2, Place d'Estienne d'Orves**
**F-75441 Paris Cedex 09 (FR)**

EP 0 379 392 B1

## Description

La présente invention concerne les articulations à rotules, et tout particulièrement les articulations destinées à être utilisées à l'extrémité des biellettes de commande transmettant des mouvements d'un levier à un autre, notamment des biellettes de commande de boîtes de vitesse de véhicules automobiles.

De façon classique ces articulations comportent, comme décrit dans FR-A- 1 512 157, un boîtier ouvert à une extrémité dans lequel la bille d'une rotule est montée avec interposition d'une cage déformable qui est en contact étroit avec elle et avec le boîtier et est immobilisée par rapport à ce dernier. La cavité interne de la cage a la même forme que la bille de sorte que la cage doit être expansée élastiquement pour permettre l'introduction de cette dernière mais se resserre automatiquement sur elle. Par contre, la cage est retenue dans le boîtier par sertissage ou rabattement vers l'intérieur des bords de l'ouverture de ce dernier.

La réalisation et l'assemblage d'une telle articulation exigent donc à la fois une grande précision et des efforts importants, ce qui conduit à réaliser le boîtier au moins en métal et à disposer d'un outillage approprié. Pour ces raisons, ces articulations ont très souvent un poids trop important et sont onéreuses.

Une articulation d'assemblage plus simple est décrite dans le document GB-A- 2166487 qui montre les caractéristiques du préambule de la revendication 1.

La présente invention a pour but de remédier à ces inconvénients en fournissant une articulation à rotule qui soit particulièrement simple à assembler et puisse sans difficulté être réalisée en tout matériau approprié et notamment en une matière plastique.

Cette invention a en effet pour objet une articulation à rotule du type ci-dessus dans laquelle la cage comporte des moyens d'accrochage dans l'extrémité du boîtier opposée à son ouverture et des nervures latérales externes, fendues, et en forme de coins, qui coopèrent avec des rainures internes également en forme de coins du boîtier pour appliquer la cage contre la bille en lui donnant une forme intérieure sphérique.

Un simple enfoncement de la cage dans le boîtier, sous l'action de la rotule elle-même, suffit pour assembler une telle articulation.

Aucun sertissage ni opération de ce type n'est par suite nécessaire et le boîtier comme la cage, peuvent être réalisés en une matière plastique ayant de bonnes caractéristiques de transmission d'effort.

Selon un mode de réalisation de l'invention, la cage comporte un fond plein d'où partent des doigts munis d'ergots d'accrochage dans un orifice du fond du boîtier.

Chaque doigt peut comporter deux ergots espacés sur sa longueur qui assurent à la cage deux positions d'accrochage respectivement d'introduction de la bille et de serrage de cette dernière.

La description ci-dessous d'un mode de réalisation, donné à titre d'exemple non limitatif et représenté aux dessins, fera d'ailleurs ressortir les avantages et caractéristiques de l'invention. Sur ces dessins :

La figure 1 est une vue en coupe longitudinale d'une biellette de commande munie à chacune de ses extrémités d'une articulation à rotule selon l'invention, l'une de ces articulations étant assemblée tandis que l'autre ne l'est pas encore.

La figure 2 est une vue de dessus de la biellette de la Fig.1.

La figure 3 est une vue à plus grande échelle, également en coupe, de l'articulation de droite de la Fig.1 après introduction de la bille dans la cage.

La figure 4 est une vue de dessus de 1 articulation de la Fig.3.

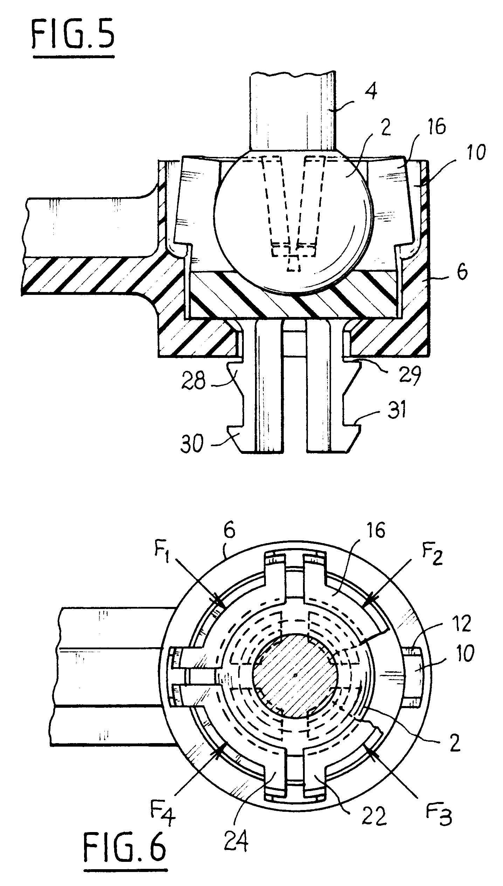

La figure 5 est une vue analogue à la Fig.3 de l'articulation assemblée.

La figure 6 est une vue de dessus de la Fig.5.

L'invention va maintenant être décrite dans son application à une bielle de commande, telle qu'une bielle de commande de boîte de vitesses de véhicule automobile, mais il apparaîtra clairement que ce n'est qu'un exemple d'utilisation et que l'articulation à rotule peut être employée dans d'autres dispositifs.

La biellette 1 représentée est destinée à la transmission de mouvements entre deux leviers munis chacun d'une rotule comportant une bille 2, 3 prolongée par une queue 4, 5 de fixation au levier. La biellette 1 comporte en conséquence, à chacune de ses extrémités, un boîtier creux 6 ayant une forme sensiblement cylindrique. Ce boîtier 6 a une extrémité 7 ouverte et, dans le mode de réalisation représenté, ses génératrices sont sensiblement perpendiculaires à l'axe de la biellette de commande 1. Intérieurement le boîtier 6 délimite également une cavité 8 sensiblement cylindrique mais comporte plusieurs rainures longitudinales 10 qui partent de l'ouverture 7 et s'étendent sur environ la moitié de la hauteur de la cavité 8. Les parois latérales 12 de chacune des rainures 10 convergent l'une vers l'autre en direction du fond 14 du boîtier. De préférence, comme représenté, les rainures 10 sont au nombre de quatre et sont diamétralement opposées deux à deux.

Dans la cavité 8 du boîtier 6 est montée une cage 16 de forme générale cylindrique dont le fond 18 a une forme complémentaire de celle de la partie inférieure de la cavité 8. La cage 16 comporte quatre fentes radiales 20, diamétralement opposées deux à deux, qui s'étendent sur la majeure partie de sa hauteur. De part et d'autre de chacune des fentes 20 une nervure longitudinale 22, 24 fait saillie radialement sur la surface extérieure de la cage 16. Les faces éloignées des nervures 22 et 24 sont inclinées et convergent l'une vers l'autre en donnant à la saillie formée par la combinaison de ces deux nervures une forme de coin.

La cage 16 est en outre munie à sa partie inférieure de doigts allongés 26, au nombre de quatre dans le mode de réalisation représenté, qui font saillie axialement sur son fond 14 et sont munis chacun d'au moins un ergot 28, et de préférence de deux ergots 28 et 30 espacés sur leur longueur, ayant une forme en dent de scie. Les doigts 26 traversent un orifice 32 ménagé dans le fond 14 du boîtier 6 et la face d'arrêt 29, 31 de chaque ergot 28 ou 30 vient appuyer sur la face extérieure de ce fond de façon à retenir la cage 16 dans le boîtier 6.

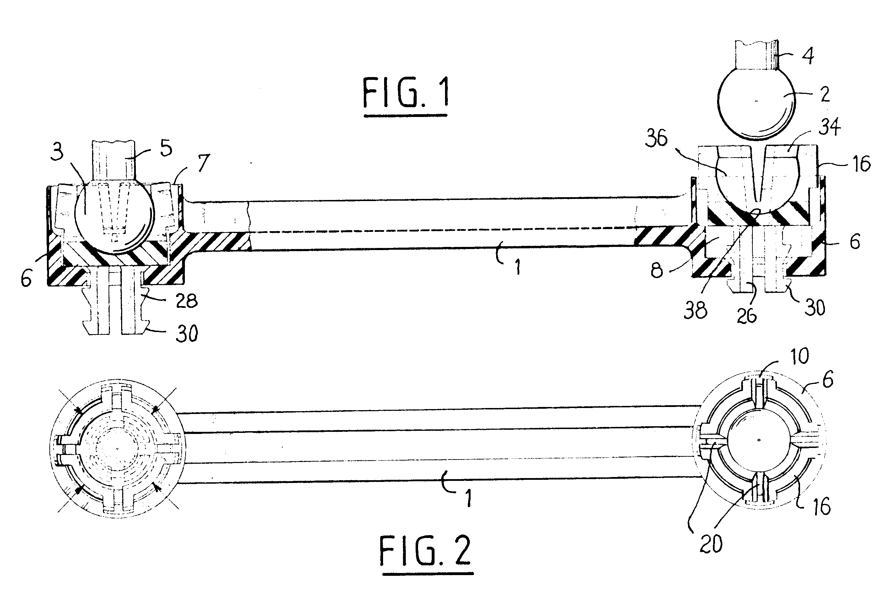

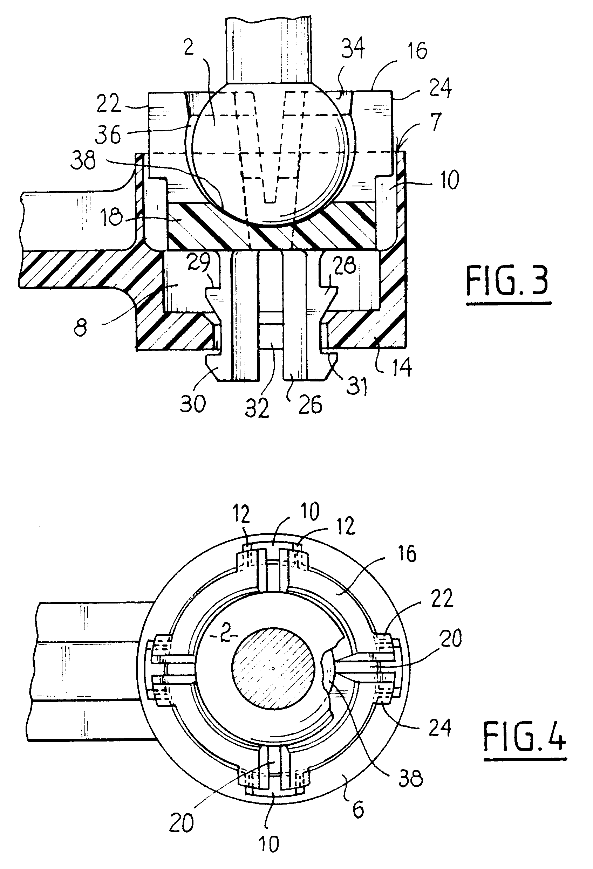

A l'opposé des doigts 26, la cavité interne 36 de la cage 16 est incurvée et est ouverte en 34. Au repos, c'est-à-dire lorsqu'aucun effort n'est exercé sur elle, l'ouverture 34 de la cage 16 a, comme le montrent les Fig.1 et 3, un diamètre sensiblement égal à celui de la bille 2 de la rotule. Le fond 38 de la cavité interne 36 de cette cage a la forme d'une calotte sphérique de diamètre voisin de celui de la bille 2 tandis que les faces latérales de la cavité 36 ont un diamètre plus grand. L'ensemble de la cage 16 avec les doigts 26, est de préférence formé d'une seule pièce en une matière plastique ayant de bonnes caractéristiques de frottement, de résistance mécanique et si nécessaire de résistance thermique.

Cette cage peut facilement être introduite dans le boîtier 6 en rapprochant les uns des autres les doigts 26 de façon à permettre aux ergots 30 de traverser l'orifice 32 du boîtier et de s'accrocher sur le fond 14 (Fig.1 et 3). Lors de cette introduction, les parties inférieures des nervures 22, 24 ont pénétré dans les rainures 10 mais seulement à la partie supérieure de celles-ci, c'est-à-dire dans leur partie la plus large, de sorte que les fentes 20 restent ouvertes et que l'ensemble de la cage est dans sa position de repos.

La bille 2 peut facilement être placée, par l'ouverture 34, dans la cavité 36. Il suffit alors d'un effort axial sur la queue 4 et/ou sur le boîtier 6, pour rapprocher ces deux organes l'un de l'autre et enfoncer les nervures 22, 24 dans les rainures 10 jusqu'au moment où le fond 18 de la cage 16 vient en butée contre le fond 14 du boîtier 6. En glissant le long des parois latérales convergentes 12 des rainures 10, les parois extérieures convergentes des rainures 22 et 24 basculent vers l'intérieur. Elles resserrent la partie supérieure des parois de la cage autour de la bille 2 selon quatre directions régulièrement espacées d'environ 45°, indiquées en F1, F2, F3 et F4 sur la Fig.6. Le diamètre de l'ouverture 34 de la cage 16 diminue également et devient inférieur à celui de la bille 2. Cette dernière est alors rigoureusement prisonnière de la cage 16 et ne risque plus à aucun moment de s'en échapper. Par contre la déformation de la cavité 36 lui a donné une forme sphérique qui lui permet d'assurer le guidage de la rotule.

Lors de la pénétration de la cage 16 à l'intérieur du boîtier 6, les ergots 30 ont été éloignés de la face externe du fond 14 et les ergots 28 sont venus progressivement en contact avec ce dernier, de sorte qu'ils verrouillent axialement la cage 16 par rapport au boîtier 6 dans sa nouvelle position et interdisent tout déplacement des nervures 22, 24 dans les rainures 10 c'est-à-dire tout relâchement accidentel du maintien de la bille 2, 3.

On dispose ainsi d'une articulation dont l'assemblage se fait de manière particulièrement simple sans nécessiter d'appareillage spécial ni coûteux, et dont le boîtier et la cage peuvent facilement être réalisés en matière plastique, par exemple par moulage, et être ainsi à la fois léger et peu onéreux. Bien entendu, le ou les boîtiers 6 peuvent également être d'une seule pièce avec l'organe qui les porte et notamment la bielle de commande 1, par exemple être moulés dans la même matière plastique.

**Revendications**

1. Articulation à rotule comportant un boîtier (6) ouvert à une extrémité dans lequel la bille (2, 3) d'une rotule est montée, avec interposition d'une cage déformable qui, après assemblage de l'articulation, est en contact étroit avec elle et avec le boîtier et est immobilisée par rapport à ce dernier, la cage (16) comportant des moyens (26 à 30) d'accrochage dans l'extrémité du boîtier opposée à l'ouverture (7), caractérisée en ce que la cage comporte de plus des nervures latérales externes (22, 24), fendues et en forme de coins, qui, lors de l'enfoncement de la cage dans le boîtier, coopèrent avec des rainures internes (10) également en forme de coins du boîtier pour appliquer la cage (16) sur la bille (2) en donnant à la cavité interne (36) de la cage une forme sphérique.

2. Articulation suivant la revendication 1, caractérisée en ce que la cage (16) comporte un fond plein (18) d'où partent des doigts (26) munis d'ergots (28, 30) d'accrochage dans un orifice (32) du fond du boîtier.

3. Articulation suivant la revendication 2, caractérisée en ce que chaque doigt (26) comporte deux ergots (28, 30) espacés sur sa longueur et assurant deux positions d'accrochage de la cage.

4. Articulation suivant l'une des revendications 2 et 3, caractérisée en ce que la cage (16) comporte quatre doigts (26) d'accrochage.

5. Articulation suivant l'une des revendications précédentes, caractérisée en ce que les nervures externes (22, 24) de la cage ont des faces latérales eloignées qui convergent l'une vers l'autre en direction du fond (18) de la cage.

6. Articulation suivant l'une des revendications précédentes, caractérisée en ce que les rainures longitudinales (10) du boîtier ont des faces latérales (12) qui convergent en direction du fond (14) de ce dernier.

7. Articulation suivant l'une des revendications précédentes, caractérisée en ce que la cavité interne (36) de la cage a, au repos, une forme incurvée de rayon supérieur à celui de la bille (2, 3) de la rotule et comporte une ouverture (34) de diamètre sensiblement égal à celui de cette même bille.

8. Articulation suivant l'une des revendications précédentes, caractérisée en ce que les nervures externes longitudinales (22, 24) de la cage de même que les rainures (10) du boîtier ne s'étendent que sur la portion de ces organes voisine de leur ouverture, les portions voisines du fond (18 ou 14) étant exactement complémentaires.

## Patentansprüche

1. Kugelgelenk mit einem an einem Ende offenen Gehäuse (6), in welchem die Kugel (2,3) eines Kugelgelenkteils montiert ist, unter Zwischenfügung eines verformbaren Käfigs (16), der nach der Montage des Gelenks in enger Berührung mit ihr und mit dem Gehäuse steht und in Bezug auf letzteres fixiert ist, wobei der Käfig (16) Mittel (26 bis 30) zur Verankerung in dem der Öffnung (7) entgegengesetzten Ende des Gehäuses aufweist, dadurch **gekennzeichnet,** daß der Käfig außerdem geschlitzte und keilförmige seitliche äußere Rippen (22,24) aufweist, die beim Eindrücken des Käfigs in das Gehäuse mit ebenfalls keilförmigen inneren Nuten (10) des Gehäuses zusammenwirken, um den Käfig (16) gegen die Kugel (2) anzudrücken und dem inneren Hohlraum (36) des Käfigs eine sphärische Gestalt zu geben.

2. Kugelgelenk nach Anspruch 1, dadurch **gekennzeichnet,** daß daß der Käfig (16) einen flachen Boden (18) aufweist, von dem Finger (26) ausgehen, die mit vorsprüngen (28,30) zur Verrastung in einer Öffnung (32) des Bodens des Gehäuses versehen sind.

3. Kugelgelenk nach Anspruch 2, dadurch **gekennzeichnet,** daß jeder Finger (26) zwei in seiner Längsrichtung in Abstand zueinander angeordnete Vorsprünge (28,30) aufweist, die zwei Verrastungspositionen des Käfigs definieren.

4. Kugelgelenk nach einem der Ansprüche 2 und 3, **dadurch** gekennzeichnet, daß der Käfig (16) vier Verrastungsfinger (26) aufweist.

5. Kugelgelenk nach einem der vorstehenden Ansprüche, dadurch **gekennzeichnet,** daß die äußeren Rippen (22,24) des Käfigs langgestreckte Seitenflächen aufweisen, die in Richtung zum Boden (18) des Käfigs aufeinander zu laufen.

6. Kugelgelenk nach einem der vorstehenden Ansprüche, dadurch **gekennzeichnet,** daß die längsverlaufenden Nuten (10) des Gehäuses Seitenflächen (12) aufweisen, die in Richtung auf den Boden (14) des Gehäuses aufeinander zu laufen.

7. Kugelgelenk nach einem der vorstehenden Ansprüche, dadurch **gekennzeichnet,** daß der innere Hohlraum (36) des Käfigs im Ruhezustand eine gekrümmte Form mit einem Radius größer als der der Kugel (2,3) des Kugelgelenkteils besitzt und eine Öffnung (34) aufweist, deren Durchmesser im wesentlichen gleich dem dieser Kugel ist.

8. Kugelgelenk nach einem der vorstehenden Ansprüche, dadurch **gekennzeichnet,** daß die äußeren Längsrippen (22,24) des Käfigs sowie die Nuten (10) des Gehäuses sich nur auf den Abschnitten dieser Bauteile erstrecken, die ihrer jeweiligen Öffnung benachbart sind, und daß die Abschnitte, die dem Boden (18 oder 14) benachbart sind, exakt zueinander komplementär sind.

## Claims

1. Ball joint comprising a housing (6) open at one end, in which housing the spherical part (2, 3) of a ball element is mounted, with the interposition of a deformable cage (16) which, after assembly of the joint, is in close contact with the spherical part and with the housing and is immobilized in relation to the housing, the cage (16) comprising engagement means (26 to 30) for fastening it in the end of the housing opposite the opening (7), **characterised in that** the cage further comprises wedge-shaped, slit, external lateral ribs (22, 24) which, when the cage is pressed into the housing, cooperate with internal grooves (10) of the housing, which are also wedge-shaped, for bringing the cage (16) to bear upon the spherical part (2), giving the internal cavity (36) of the cage a spherical shape.

2. Joint according to claim 1, **characterised in that** the cage (16) has a solid base (18) from which there emerge fingers (26) provided with lugs (28, 30) for engaging in an opening (32) in the base of the housing.

3. Joint according to claim 2, **characterised in that** each finger (26) comprises two lugs (28, 30) distributed over its length which give the cage two positions of engagement.

4. Joint according to one of claims 2 and 3, **characterised in that** the cage (16) comprises four engagement fingers (26).

5. Joint according to one of the preceding claims, **characterised in that** the external ribs (22, 24) of the cage have far lateral surfaces which converge with each other in the direction of the base (18) of the cage.

6. Joint according to one of the preceding claims, **characterised in that** the longitudinal grooves (10) of the housing have lateral surfaces (12) which converge in the direction of the base (14) of the said housing.

7. Joint according to one of the preceding claims, **characterised in that** the internal cavity (36) of the cage has, at rest, an inward-curved shape with a radius larger than that of the spherical part (2, 3) of the ball element and has an opening (34) with a diameter substantially equal to that of the said spherical part.

8. Joint according to one of the preceding claims, **characterised in that** the longitudinal external ribs (22, 24) of the cage and the grooves (10) of the housing extend only over the portion of these elements which is adjacent to the opening therein, the portions adjacent to the base (18 or 14) being exactly complementary.

FIG.1

FIG.2

FIG.3

FIG.4

EP 0 379 392 B1

FIG.5

FIG.6

8